# FASCICULE DE BREVET EUROPEEN

(11) **EP 2 883 760 B1**
(45) Date de publication et mention de la délivrance du brevet: **30.12.2020**
(21) Numéro de dépôt: 14195316.6
(22) Date de dépôt: 28.11.2014
(51) Int. Cl.: B60S 1/34

(54) **Agrafe de fixation d'un tuyau de circulation de fluide à un bras d'entraînement d'un balai d'essuie-glace de véhicule**
Befestigungsklammer eines Flüssigkeitskreislaufschlauchs an einem Antriebsarm eines Scheibenwischerblattes eines Fahrzeugs
Clip for attaching a fluid circulation pipe to a drive arm of a vehicle windscreen wiper

(30) Priorité: 10.12.2013 FR 1362356
(43) Date de publication de la demande: 17.06.2015
(73) Titulaire: Valeo Systèmes d'Essuyage, 78322 Le Mesnil Saint Denis (FR)
(72) Inventeur: Picot, Philippe, 63000 Les Pradeaux (FR); Rollet, Sébastien, 63260 Aigueperse (FR)
(74) Mandataire: Valeo Vision

(56) Documents cités:
- EP-A1- 2 591 958
- FR-A1- 2 971 032
- JP-A- 2006 007 971
- US-A1- 2013 015 288

## Description

### DOMAINE TECHNIQUE

La présente invention concerne une agrafe de fixation d'un tuyau de circulation de fluide à un bras d'entraînement d'un balai d'essuie-glace de véhicule, en particulier automobile, ainsi qu'un bras d'entraînement d'un balai d'essuie-glace portant au moins une telle agrafe.

### ETAT DE L'ART

Un balai d'essuie-glace comprend en général un corps longitudinal portant une lame d'essuyage, en général en caoutchouc, destinée à frotter contre le pare-brise d'un véhicule pour évacuer de l'eau en l'amenant en dehors du champ de vision du conducteur. Le balai est porté par un bras qui est entraîné par un moteur dans un mouvement de va-et-vient angulaire. Les moyens de liaison du balai au bras comprennent en général un connecteur qui est solidaire du corps du balai et un adaptateur qui est articulé sur le connecteur et fixé à une extrémité du bras, dont l'extrémité opposée est articulée sur le véhicule et accouplée au moteur.

Il est connu d'équiper un balai d'essuie-glace avec des moyens de projection de fluide, tel qu'un liquide lave-glace. Le liquide lave-glace est contenu dans un réservoir situé sous le capot du véhicule et est amené jusqu'au balai par au moins un tuyau souple qui s'étend en partie le long du bras. Le tuyau ne doit pas venir au contact du pare-brise lors des déplacements du balai, notamment pour éviter qu'il ne s'use. De plus, il est préférable que le tuyau ne soit pas visible par les occupants du véhicule pour une raison esthétique. Une solution connue consiste à fixer le tuyau au bras au moyen d'une agrafe qui comprend des moyens de retenue du tuyau et des moyens de fixation au bras, en général par encliquetage élastique (voir par exemple le document JP 2006 007 971 A).

Cependant, les agrafes de la technique antérieure ne sont pas entièrement satisfaisantes car elles sont relativement volumineuses et donc encombrantes et leur méthode de montage n'est pas simple et peut nécessiter l'utilisation d'outil spécifique. Par ailleurs, on a constaté qu'en fonctionnement, le tuyau peut se déplacer le long de son axe. Ces déplacements peuvent être provoqués par le déplacement du bras au cours du balayage, par le pivotement du bras depuis sa position de service en appui sur le pare-brise jusqu'à une position de maintenance écartée du pare-brise, et par une tension du tuyau générée par exemple par son alimentation en liquide lave-glace. Ces déplacements peuvent provoquer des glissements du tuyau vis-à-vis de l'agrafe, qui peuvent accélérer l'usure du tuyau, et peuvent également entraîner un basculement de l'agrafe qui se déplacer alors vis-à-vis du bras.

L'invention propose une solution simple, efficace et économique à au moins une partie des problèmes de la technique antérieure.

### EXPOSE DE L'INVENTION

L'invention propose une agrafe de fixation d'un tuyau de circulation de fluide à un bras d'entraînement d'un balai d'essuie-glace de véhicule, en particulier automobile, cette agrafe ayant une forme générale sensiblement en U dont la partie médiane comprend des moyens de retenue du tuyau et les branches sont élastiquement déformables et sont configurées pour coopérer, de préférence par encliquetage élastique, avec le bras, caractérisée en ce qu'au moins l'une des branches comprend en outre à son extrémité libre des moyens d'appui élastiquement déformables configurés pour coopérer avec le bras. Selon l'invention, chaque branche comprend à son extrémité libre des moyens d'appui élastiquement déformables configurés pour coopérer avec le bras.

L'agrafe est ainsi configurée pour faciliter son montage sur le bras ainsi que sa tenue vis-à-vis du bras. L'agrafe a une forme particulière (en U, comprenant deux branches reliées ensemble par une partie médiane) qui lui permet de s'adapter facilement au bras actuellement sur le marché. Les moyens de fixation de l'agrafe au bras sont de préférence du type à encliquetage élastique et sont donc configurés pour coopérer par encliquetage élastique avec des moyens complémentaires du bras, tels que des orifices ou des trous borgnes.

Selon l'invention, les branches élastiquement déformables de l'agrafe comprennent des moyens d'appui qui sont eux-mêmes élastiquement déformables et sont destinés à coopérer par appui avec le bras. De préférence, les branches et leurs moyens d'appui sont configurés pour qu'une déformation élastique des branches n'entraîne pas forcément une déformation élastique des moyens d'appui, et inversement, qu'une déformation élastique des moyens d'appui n'entraîne pas forcément une déformation élastique des branches. Les branches peuvent par exemple être élastiquement déformables par rapprochement ou écartement l'une de l'autre.

Avantageusement, les moyens d'appui de l'agrafe selon l'invention permettent de limiter voire empêcher tout basculement de l'agrafe autour d'un axe transversal, sensiblement perpendiculaire aux branches de l'agrafe. Ils peuvent en outre permettre de solliciter l'agrafe dans une position de verrouillage vis-à-vis du bras.

Les moyens d'appui de chaque branche comprennent, selon l'invention, une languette élastiquement déformable dont une extrémité est reliée à l'extrémité libre de la branche et dont l'extrémité opposée comprend une surface d'appui. Les languettes sont de préférence orientées dans des directions sensiblement opposées. Elles peuvent être sensiblement parallèles entre elles. Chaque branche et sa languette s'étendent, selon l'invention, sensiblement dans un même plan. Les languettes peuvent par exemple être élastiquement déformables par déplacement dans ce plan. Autrement dit, les moyens d'appui d'une branche peuvent être élastiquement déformables dans le plan de cette branche.

La surface d'appui de chaque languette peut être une surface incurvée convexe, telle qu'une surface cylindrique externe. Cette surface peut coulisser sur une surface du bras lors du montage de l'agrafe et la déformation de ses moyens d'appui.

Dans un cas particulier de réalisation de l'agrafe selon l'invention, les moyens d'appui de l'une des branches ne sont pas symétriques aux moyens d'appui de l'autre branche par rapport à un plan longitudinal médian passant sensiblement entre les branches, parallèlement à celles-ci.

Dans le cas où les branches de l'agrafe comprennent chacun un bord longitudinal à son extrémité libre, la surface d'appui de premiers moyens d'appui peut être située sensiblement au niveau d'une extrémité longitudinale du bord longitudinal d'une branche, et la surface d'appui des moyens d'appui de l'autre branche peut être située sensiblement au niveau de l'extrémité longitudinale opposée du bord longitudinal de cette autre branche.

Les moyens de retenue peuvent comprendre un organe longitudinal tubulaire définissant un logement configuré pour recevoir le tuyau, de préférence par encliquetage élastique. Cet organe peut comprendre une fente longitudinale d'insertion du tuyau dans le logement. Cette fente débouche de préférence sensiblement du côté de l'ouverture du U. On comprend ainsi que le tuyau est engagé dans le logement de l'organe en le passant à travers l'ouverture de l'agrafe. On comprend en outre que, dans le cas où l'ouverture de l'agrafe est fermée par une partie du bras, lorsque l'agrafe est montée sur le bras, le tuyau ne peut pas s'échapper de l'agrafe, ce qui est avantageux. La fente de l'organe peut avoir une largeur inférieure au diamètre du tuyau. Cette fente peut être délimitée par deux bords longitudinaux en regard de l'organe, qui peuvent être écartés l'un de l'autre par déformation élastique de l'organe.

Avantageusement, les moyens de retenue comprennent des moyens d'ancrage dans le matériau du tuyau. Ces moyens d'ancrage peuvent comprendre des griffes en saillie, par exemple sur une surface interne du logement précité défini par l'organe. Ces moyens d'ancrage assurent une immobilisation axiale du tuyau qui ne peut ainsi pas se déplacer axialement vis-à-vis de l'agrafe.

Chaque branche de l'agrafe peut comporter sur sa face latérale externe un élément en saillie configuré pour être engagé dans un orifice du carter, de préférence par encliquetage élastique comme indiqué dans ce qui précède. L'élément en saillie de l'une des branches peut être différent de celui de l'autre branche. Cette différence peut être une différence de forme et/ou de fonction. Par exemple, l'élément en saillie de l'une des branches peut comprendre un crochet. Cet élément en saillie, qui a par exemple une forme générale en L, a ainsi une fonction d'accrochage sur le bras. En variante ou en caractéristique additionnelle, l'élément en saillie de l'une des branches comprend un pion de centrage. Ce pion a ainsi une fonction de centrage et peut comprendre des faces latérales de butée destinées à coopérer avec les bords de l'orifice dans lequel est engagé ce pion. Le pion a par exemple une forme générale sensiblement parallélépipédique.

Les branches de l'agrafe peuvent en outre comprendre des doigts en saillie de guidage de l'agrafe lors de son montage. Ces doigts peuvent être en saillie au niveau des extrémités libres des branches de l'agrafe. Ils peuvent s'étendre dans une direction sensiblement opposée à la partie médiane de l'agrafe. Leurs extrémités libres peuvent comprendre une surface incurvée convexe qui peut éventuellement être une surface d'appui sur le bras.

Dans un cas particulier de réalisation de l'agrafe selon l'invention, le doigt de l'une des branches n'est pas symétrique au doigt de l'autre branche par rapport à un plan longitudinal médian passant sensiblement entre les branches, parallèlement à celles-ci.

Dans le cas où les branches de l'agrafe comprennent chacun un bord longitudinal à son extrémité libre, l'un des doigts peut être situé sensiblement au niveau d'une extrémité longitudinale du bord longitudinal d'une branche, et l'autre doigt peut être situé sensiblement au niveau de l'extrémité longitudinale opposée du bord longitudinal de l'autre branche.

L'agrafe selon l'invention est de préférence formée d'une seule pièce.

La présente invention concerne encore un bras d'entraînement d'un balai d'essuie-glace de véhicule, en particulier automobile, caractérisé en ce qu'il comprend au moins une agrafe telle que décrite ci-dessus.

De préférence, le bras comprend un carter dont au moins une partie a en section une forme en U et comporte deux flancs reliés ensemble par une paroi de fond. L'agrafe peut être montée sur le carter de sorte que ses branches coopèrent par encliquetage élastique avec les flancs du carter et que ses moyens d'appui coopèrent avec la paroi de fond du carter.

Un ressort peut être monté entre les flancs du carter. Chaque branche de l'agrafe peut s'étendre respectivement entre ce ressort et un des flancs du carter, ce qui est particulièrement avantageux en termes d'encombrement.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés, dans lesquels :
- la figure 1 est une vue partielle en perspective d'un bras d'entraînement d'un balai d'essuie-glace de véhicule automobile, ce bras comportant une agrafe selon l'invention de fixation d'un tuyau de circulation de fluide ;
- la figure 2 est une vue en perspective et à plus grande échelle de l'agrafe de la figure 1 ;
- la figure 3 est une autre vue en perspective de l'agrafe de la figure 1 ; et
- la figure 4 est une vue en perspective et en coupe transversale de l'agrafe de la figure 1.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation d'un bras d'entraînement d'un balai d'essuie-glace. La direction longitudinale correspond à l'axe principal du bras dans lequel il s'étend, alors que les orientations latérales correspondent à des droites concourantes, c'est-à-dire qui croisent la direction longitudinale, notamment perpendiculaires à l'axe longitudinal du bras. Pour les directions longitudinales, les dénominations extérieure ou intérieure s'apprécient par rapport au point de fixation du bras sur le véhicule, la dénomination intérieure correspondant à l'extrémité du bras fixée au véhicule. Enfin, les directions référencées comme supérieures ou inférieures correspondent à des orientations perpendiculaires au plan de rotation du bras, la dénomination inférieure contenant le plan du pare-brise.

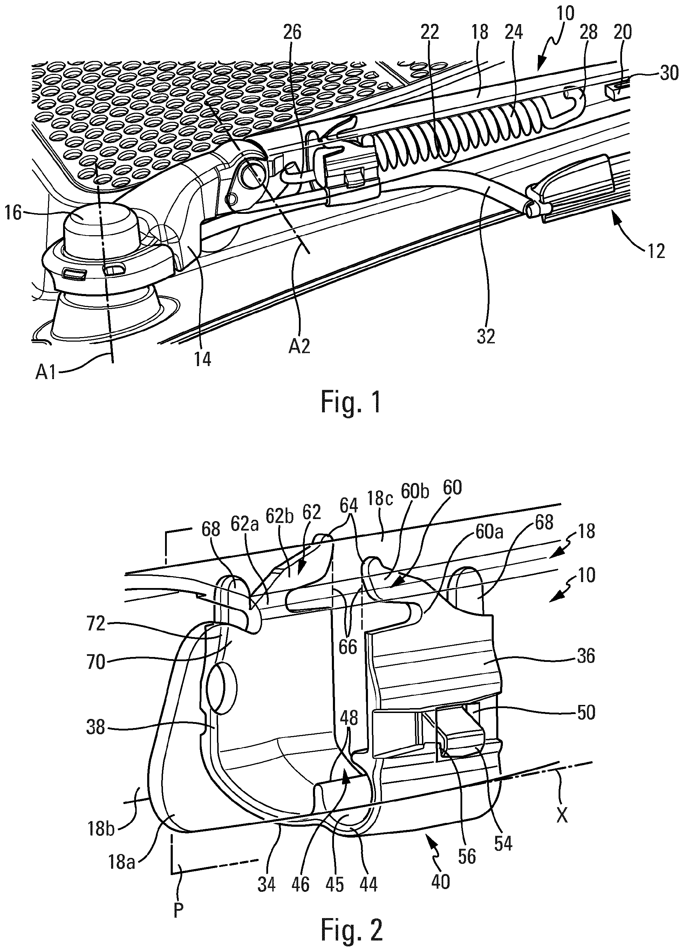

Il est illustré à la figure 1 un bras 10 d'entraînement d'un balai d'essuie-glace 12 (partiellement représenté) de véhicule automobile, ce bras 10 ayant une forme générale allongée et étant reliée par son extrémité longitudinale extérieure au balai d'essuie-glace 12 et par son extrémité longitudinale intérieure à une tête d'entraînement 14.

La tête d'entraînement 14 est fixée à l'extrémité supérieure d'un arbre 16 d'entraînement en balayage rotatif alterné du bras 10 autour de l'axe de pivotement A1.

Le bras 10 comprend un carter 18 formant une partie d'extrémité intérieure du bras et une tige métallique 20 rigide formant une partie d'extrémité extérieure du bras.

L'extrémité intérieure du carter 18 et la tête d'entraînement 14 sont montés articulés autour d'un axe de pivotement transversal A2 permettant de soulever le bras 10 du pare-brise.

L'extrémité extérieure du carter 18 est fixée solidement par un rétrécissement (non visible) sur la tige métallique 20.

Le carter 18 du bras 10 a, sensiblement sur toute sa longueur, une section en forme de U renversée (c'est-à-dire ouvert du côté du pare-brise) qui définit une cavité longitudinale interne 22. Le carter 18 comprend ainsi deux flancs latéraux 18a, 18b dont les extrémités supérieures sont reliées entre elles par une paroi de fond 18c.

Une partie d'extrémité intérieure de la tige métallique 20 s'étend à l'intérieur de la cavité 22 du carter 18 et est fixée par son extrémité intérieure à une extrémité d'un ressort 24 de pression d'essuyage du balai d'essuie-glace 12, l'extrémité opposée du ressort étant reliée à la tête d'entraînement 14. Le ressort 24 est visible par transparence en figure 1. L'axe longitudinal du ressort 24 est sensiblement parallèle à l'axe longitudinal du bras 10.

De façon connue en soi, ce ressort 24 est un ressort hélicoïdal en traction présentant plusieurs spires enroulées entre une extrémité intérieure 26 et une extrémité extérieure 28, chacune de ces extrémités présentant un crochet de fixation.

Le crochet de l'extrémité intérieure 26 du ressort 24 est fixé à la tête d'entraînement 14 et le crochet de son extrémité extérieure 28 est engagé et retenu dans un orifice 30 de l'extrémité intérieure de la tige métallique 20.

Le balai d'essuie-glace 12 comporte des moyens (non représentés) de projection de liquide lave-glace, qui sont alimentés en liquide lave-glace par un tuyau souple 32. De manière connue, le tuyau 32 est relié à un réservoir de liquide lave-glace (non représenté) agencé à l'intérieur du véhicule.

Comme on le voit sur la figure 1, le tuyau 32 court le long du bras 10, sur sensiblement toute la longueur de son carter 18, son extrémité extérieure étant reliée au balai 10 en vue de l'alimentation en liquide lave-glace de ses moyens de projection.

Le tuyau 32 est fixé au bras 10 pour éviter les inconvénients décrits dans ce qui précède. Le bras 10 est équipé d'agrafe(s) qui comprennent des moyens de retenue du tuyau 32 et des moyens de fixation au bras. Selon l'invention, l'agrafe a une forme générale sensiblement en U dont la partie médiane comprend les moyens de retenue du tuyau et les branches sont élastiquement déformables et forment des moyens de fixation configurés pour coopérer par encliquetage élastique avec le bras.

Dans le mode de réalisation de l'invention représenté aux figures 1 à 4, le bras 10 est équipé d'une agrafe 40 selon l'invention qui est fixée au carter 18 du bras 10. Les références 34, 36 et 38 désignent respectivement la partie médiane et les deux branches de l'agrafe 40.

Comme cela est mieux visible en figure 2, les moyens de retenue de l'agrafe 40 selon l'invention comprennent un organe longitudinal 44 qui définit un logement interne 45 d'engagement et de retenue du tuyau 32. On note X, l'axe longitudinal de cet organe 44, qui est sensiblement confondu avec l'axe du tuyau 32, lorsque ce dernier est monté dans le logement 45, et qui est sensiblement parallèle à l'axe longitudinal du bras 10. Le logement 45 de l'organe 44 a une forme générale cylindrique et débouche axialement aux deux extrémités longitudinales de l'organe.

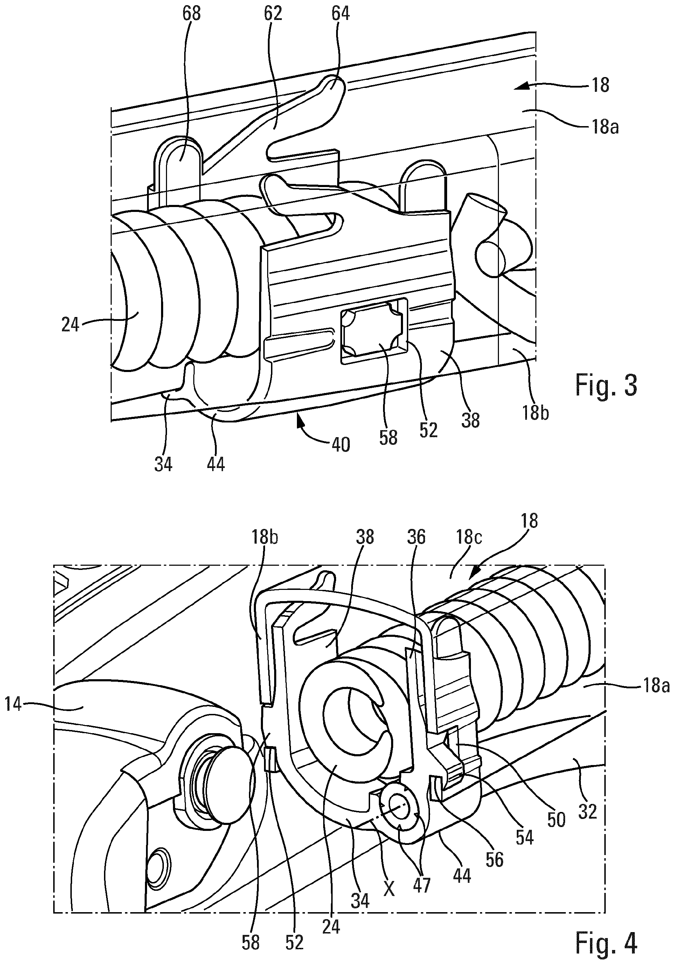

Dans l'exemple représenté, l'organe 44 a une forme générale cylindrique et tubulaire et comprend une surface cylindrique interne destinée à venir au contact du tuyau 32. Le diamètre interne de l'organe 44, c'est-à-dire le diamètre de son logement interne 45, peut être égal ou inférieur au diamètre externe du tuyau 32. Comme cela est visible en figure 4, l'organe 44 peut comprendre des griffes 47 en saillie sur sa surface cylindrique interne, ces griffes 47 étant destinées à s'ancrer dans le matériau du tuyau, sans toutefois le transpercer, pour assurer une immobilisation axiale (le long de l'axe X) du tuyau 32 vis-à-vis de l'agrafe.

L'organe 44 est ici positionné sur l'un des côtés de la partie médiane 34 de l'agrafe 40, dans la zone de raccordement de cette partie médiane à l'une 36 des branches de l'agrafe.

L'organe 44 est fendu et ouvert sur toute sa longueur, c'est-à-dire qu'il comporte une fente longitudinale 46 traversante, qui est délimitée par deux bords longitudinaux 48 sensiblement parallèles et en regard l'un de l'autre. La fente 46 peut avoir une largeur inférieure au diamètre externe du tuyau 32. La fente 46 débouche ici vers l'intérieur de l'agrafe 40 du côté de son ouverture, c'est-à-dire sensiblement vers le haut dans l'exemple représenté.

L'organe 44 est élastiquement déformable de façon à autoriser un écartement des bords 48 l'un de l'autre, se traduisant par une augmentation de la largeur de la fente 46. Ceci permet d'engager et de monter le tuyau 32 dans le logement 45 de l'organe 44. Pour cela, le tuyau 32 est engagé dans l'agrafe 40 via son ouverture, qui est ici orienté vers le haut, puis le tuyau est positionné le long de la fente 46 et à l'entrée de celle-ci. Une légère force exercée sur le tuyau 32 vers le logement 45 (vers le bas) provoque l'appui du tuyau sur les bords longitudinaux 48 de la fente 46, et se traduit par un écartement de ceux-ci, jusqu'à ce que la largeur de la fente soit suffisante pour laisser passer le tuyau dans le logement 45 de l'organe 44.

Chaque branche 36, 38 de l'agrafe 40 comprend des moyens d'encliquetage élastique dans des orifices 50, 52 des flancs 18a, 18b du carter 18 du bras 10, respectivement (figures 2 et 3).

Dans l'exemple représenté, les branches 36, 38 comportent sur leurs faces latérales externes des éléments en saillie configurés pour être engagés dans les orifices 50, 52 des flancs 18a, 18b du carter 18. Les éléments en saillie des deux branches différent ici l'un de l'autre par leurs formes et leurs fonctions.

La branche 36 de l'agrafe 40 comprend un crochet en saillie 54 sur sa face latérale externe, sensiblement au milieu de cette face (figure 2). Le crochet 54 s'étend depuis la branche 36 dans une direction sensiblement perpendiculaire à un plan médian P passant sensiblement au milieu des branches et parallèlement à celles-ci. Le crochet 54 a une forme générale en L et comprend une paroi dont une extrémité est reliée à la branche 36 et dont l'extrémité opposée est reliée à un rebord, qui est ici orienté vers le bas, c'est-à-dire du côté de la partie médiane 34 de l'agrafe 40. Le rebord s'étend à une distance ou hauteur prédéterminée de la face latérale externe de la branche 36 et définit avec cette face une cavité 56.

Le crochet 54 est dimensionné pour pouvoir être engagé dans l'orifice 50 du flanc 18a du carter 18, et la distance ou hauteur précitée du rebord du crochet 54 est supérieure ou égale à l'épaisseur de matière du flanc 18a de façon à ce qu'une partie (ici inférieure) du bord périphérique de l'orifice 50 puisse être engagée dans la cavité 56 définie par le crochet. La figure 2 représente le crochet 54 dans une position dans laquelle il est engagé dans l'orifice 50 du flanc 18a du carter, et la figure 4 représente le crochet 54 dans une position de verrouillage dans laquelle il coopère avec la partie inférieure du bord périphérique de l'orifice 50, cette partie étant engagée dans la cavité 56. La branche 36 et son crochet 54 ont été déplacés en translation verticale du haut vers le bas pour amener ce crochet de la position de la figure 2 à celle de la figure 4.

Comme cela est visible dans cette figure 4, les branches sont relativement planes et parallèles. Elles ont chacune une orientation sensiblement verticale. Leurs parties d'extrémité supérieures sont amincies.

On se réfère désormais à la figure 3 pour visualiser l'élément en saillie de l'autre branche 38 de l'agrafe 40, qui est ici un pion de centrage 58. Ce pion 58 est en saillie sur la face latérale externe de la branche 38, sensiblement au milieu de cette face. Il s'étend depuis la branche 38 dans une direction sensiblement perpendiculaire au plan médian P. Il a une forme générale parallélépipédique.

Le pion 58 est dimensionné pour pouvoir être engagé dans l'orifice 52 du flanc 18b du carter 18. Il a une épaisseur inférieure ou égale à l'épaisseur de matière du flanc 18b.

Selon d'autres caractéristiques de l'agrafe 40 selon l'invention, les branches 36, 38 de celle-ci comprennent à leurs extrémités supérieures libres des moyens d'appui élastiquement déformables configurés pour prendre appui sur le bras 10, et en particulier sur la paroi de fond 18c de son carter 18, afin de solliciter l'agrafe 40 vers le bas et la maintenir dans la position de verrouillage précitée illustrée en figure 4. Ces moyens d'appui limitent voire empêchent en outre un basculement ou une rotation de l'agrafe 40 autour d'un axe perpendiculaire au plan P.

Les moyens d'appui de chaque branche 36, 38 comprennent ici une languette 60, 62 élastiquement déformable. La languette 60, 62 de chaque branche 36, 38 est relativement plane et s'étend sensiblement dans le même plan que celui de la branche correspondante.

Chaque languette 60, 62 est ici formée par un prolongement de matière de la branche 36, 38. L'extrémité supérieure libre de chaque branche 36, 38 comprend un bord longitudinal auquel est reliée, sensiblement en son milieu, une extrémité de la languette correspondante.

Les languettes 60, 62 ont chacune une forme générale en L et comportent donc deux parties reliées entre elles.

La languette 60 portée par la branche 36 a une première partie 60a sensiblement verticale qui est reliée au bord supérieur de la branche et une seconde partie 60b sensiblement longitudinale qui s'étend vers une extrémité longitudinale de l'agrafe 40 (qui est ici l'extrémité de l'agrafe située du côté de la pièce d'entraînement 14), depuis la première partie.

La languette 62 portée par la branche 38 a une première partie 62a sensiblement verticale qui est reliée au bord supérieur de la branche et une seconde partie 62b sensiblement longitudinale qui s'étend vers l'extrémité longitudinale opposée de l'agrafe 40 (c'est-à-dire l'extrémité de l'agrafe située du côté du balai 12), depuis la première partie.

Les parties longitudinales des languettes 60, 62 s'étendent donc dans des directions longitudinales sensiblement opposées
La partie longitudinale de chaque languette 60, 62 est espacée verticalement du bord supérieur précité de la branche correspondante et comprend à son extrémité libre, opposée à la partie verticale de cette languette, un ergot 64 en portion de cylindre dont la surface cylindrique externe est une surface d'appui destinée à coopérer avec la paroi de fond 18c du carter 18 du bras. L'ergot 64 s'étend ici vers le haut (c'est-à-dire du côté opposé à la partie médiane 34 de l'agrafe) depuis l'extrémité libre de chaque languette.

On constate dans les dessins que l'extrémité libre de chaque languette 60, 62 et/ou son ergot 64 qu'elle porte sont sensiblement alignés en direction verticale avec une extrémité longitudinale de l'agrafe 40 (cf. traits pointillés 66 en figure 2).

Chaque languette 60, 62 est élastiquement déformable par flexion dans un plan sensiblement parallèle au plan P et dans laquelle est contenue la languette en position de repos (représentée en figure 2). Lors d'une déformation d'une languette par appui de son ergot 64 sur la paroi de fond 18c du carter, la languette fléchit vers le bas et se rapproche du bord supérieur de la branche correspondante.

L'agrafe 40 selon l'invention comprend en outre des doigts de guidage 68 qui facilitent le montage de l'agrafe 40. Chaque branche 36, 38 comprend ici un doigt 68 qui est en saillie sur le bord supérieur libre de cette branche. Il s'étend vers le haut, sensiblement verticalement, depuis la branche.

Comme on peut le voir en figure 2, chaque doigt 68 comprend une face latérale interne 70 pouvant coopérer avec le ressort 24 du bras pour guider l'agrafe 40 lors de son montage. Chaque face 70 s'étend sensiblement parallèlement au plan de la branche et est écartée de celle-ci (vers l'intérieure de l'agrafe) afin que cette face glisse sur le ressort et maintienne les branches à distance de ce dernier lors de l'insertion de l'agrafe entre les flancs 18a, 18b du carter.

On constate en outre en figure 2 que le bord périphérique 72 de chaque doigt 68, situé à l'intérieur de l'agrafe 40, est à section arrondie convexe. Par ailleurs, chaque doigt 68 est situé sensiblement au niveau de l'une des extrémités longitudinales du bord supérieur libre d'une branche 36, 38, qui est opposée à l'extrémité longitudinale de ce bord au niveau duquel est située l'extrémité libre de chaque languette 60, 62 et/ou son ergot

Comme cela est également visible dans les dessins, l'agrafe 40 est formée d'une seule pièce, par exemple en matériau plastique.

Le montage de l'agrafe 40 sur le bras 10 peut être réalisé de la façon suivante. L'agrafe 40 est disposée sous le carter 18 du bras 10 de sorte que ses branches 36, 38 soient sensiblement parallèles et en regard des flancs 18a, 18b du carter et que son ouverture soit orientée vers le haut. Les branches 36, 38 sont déformées élastiquement en les rapprochant légèrement puis l'agrafe est déplacée en translation verticale vers le haut, jusque dans la cavité 22 du carter 18. Lors de l'insertion de l'agrafe 40 dans la cavité 22, les faces latérales internes 70 des doigts 68 prennent appui et glissent sur le ressort 24. Le déplacement de l'agrafe vers le haut est poursuivi jusqu'à ce que les ergots 64 des languettes 60, 62 prennent appui sur la paroi de fond 18c du carter et est encore poursuivi jusqu'à ce que le crochet 54 et le pion 58 soient respectivement alignés transversalement avec les orifices 50, 52 des flancs 18a, 18b du carter, ce qui provoque une déformation élastique des languettes dont les extrémités libres se rapprochent des bords supérieurs des branches 36, 38. Un retour élastique automatique des branches 36, 38 de l'agrafe 40 va provoquer l'engagement du crochet 54 et du pion 58 respectivement dans les orifices 50, 52 des flancs 18a, 18b. Un autre retour élastique automatique, cette fois-ci de la languette 60 de l'agrafe 40 va provoquer l'engagement de la partie inférieure du bord périphérique de l'orifice 50 du flanc 18a dans la cavité 56 du crochet 54, et ainsi le verrouillage de l'agrafe 40. Dans cette position de verrouillage, les extrémités libres des doigts 68 peuvent venir en appui sur la paroi de fond 18c pour participer, avec les languettes 60, 62, à l'immobilisation de l'agrafe 40 en rotation autour d'un axe perpendiculaire au plan P.

Dans l'exemple décrit dans ce qui précède, le bras est équipé d'une seule agrafe de fixation du tuyau de circulation de liquide lave glace. Il est bien entendu envisageable qu'un bras soit équipé de deux ou plus agrafes de ce type, en fonction notamment de la longueur du bras (un bras relativement long peut avoir besoin de plus d'agrafes répartis sur sa longueur qu'un bras plus court, pour assurer une bonne fixation du tuyau vis-à-vis du bras).

## Revendications

1. Agrafe (40) de fixation d'un tuyau (32) de circulation de fluide à un bras (10) d'entraînement d'un balai d'essuie-glace (12) de véhicule, en particulier automobile, le bras comprenant un carter (18) ayant une section en forme de U renversée définissant une cavité longitudinale interne et comportant deux flancs (18a, 18b) reliés ensemble par une paroi de fond (18c), cette agrafe ayant une forme générale sensiblement en U dont la partie médiane (34) comprend des moyens de retenue du tuyau et les branches (36, 38) sont élastiquement déformables et sont configurées pour coopérer, de préférence par encliquetage élastique, avec le bras, les branches (36, 38) de l'agrafe étant sensiblement parallèles et destinées à être disposées à l'intérieur de la cavité longitudinale interne du carter et au moins l'une des branches comprenant en outre à son extrémité libre des moyens d'appui (60, 62, 64) élastiquement déformables configurés pour coopérer avec la paroi de fond du carter, **caractérisé en ce que** les moyens d'appui comprennent une languette (60, 62) élastiquement déformable dont une extrémité est reliée à l'extrémité libre de la branche et dont l'extrémité opposée comprend une surface d'appui destinée à coopérer avec le bras, chaque branche (36, 38) et sa languette (60, 62) s'étendent sensiblement dans un même plan.

2. Agrafe (40) selon la revendication 1, **caractérisée en ce que** les moyens de retenue comprennent un organe longitudinal (44) tubulaire définissant un logement (45) configuré pour recevoir le tuyau (32), de préférence par encliquetage élastique.

3. Agrafe (40) selon la revendication 2, **caractérisée en ce que** l'organe (44) comprend une fente longitudinale (46) d'insertion du tuyau (32) dans le logement (45), cette fente débouchant de préférence sensiblement du côté de l'ouverture du U.

4. Agrafe (40) selon l'une quelconque des revendications précédentes, **caractérisée en ce que** les moyens de retenue comprennent des moyens (47) d'ancrage dans le matériau du tuyau (32).

5. Agrafe (40) selon l'une quelconque des revendications précédentes, **caractérisée en ce que** chaque branche (36, 38) comporte sur sa face latérale externe un élément en saillie (54, 58) configuré pour être engagé dans un orifice (50, 52) du carter (18).

6. Agrafe (40) selon la revendication 5, **caractérisée en ce que** l'élément en saillie (54, 58) de l'une des branches (36, 38) est différent de celui de l'autre branche.

7. Agrafe (40) selon la revendication 5 ou 6, **caractérisée en ce que** l'élément en saillie de l'une des branches (36) comprend un crochet (54), ayant par exemple une forme générale en L.

8. Agrafe (40) selon l'une des revendications 5 à 7, **caractérisée en ce que** l'élément en saillie de l'une des branches (38) comprend un pion de centrage (58), ayant par exemple une forme générale sensiblement parallélépipédique.

9. Agrafe (40) selon l'une quelconque des revendications précédentes, **caractérisée en ce que** la surface d'appui de chaque languette (60, 62) est une surface incurvée convexe.

10. Agrafe (40) selon l'une quelconque des revendications précédentes, **caractérisée en ce que** les branches (36, 38) comprennent également des doigts (68) en saillie de guidage de l'agrafe lors de son montage.

11. Agrafe (40) selon l'une quelconque des revendications précédentes, **caractérisée en ce que** chaque branche comprend à son extrémité libre des moyens d'appui (60, 62, 64) élastiquement déformables configurés pour coopérer avec le bras.

12. Bras (10) d'entraînement d'un balai d'essuie-glace (12) de véhicule, en particulier automobile, **caractérisé en ce qu'**il comprend au moins une agrafe (40) selon l'une quelconque des revendications précédentes.

13. Bras (10) selon la revendication 12, **caractérisé en ce qu'**il comprend un carter (18) dont au moins une partie a en section une forme en U et comporte deux flancs (18a, 18b) reliés ensemble par une paroi de fond (18c), l'agrafe (40) étant montée sur le carter de sorte que ses branches (36, 38) coopèrent par encliquetage élastique avec les flancs du carter et que ses moyens d'appui (60, 62, 64) coopèrent avec la paroi de fond du carter.

14. Bras (10) selon la revendication 13, **caractérisé en ce qu'**un ressort (24) est monté entre les flancs (18a, 18b) du carter (18), chaque branche (36, 38) de l'agrafe (40) s'étendant respectivement entre le ressort (24) et un des flancs du carter.

## Patentansprüche

1. Befestigungsklammer (40) eines Flüssigkeitsschlauches (32) an einem Antriebsarm (10) eines Scheibenwischerblattes (12) eines Fahrzeugs, insbesondere eines Kraftfahrzeugs, wobei der Arm ein Gehäuse (18) umfasst, das einen umgekehrt U-förmigen Querschnitt aufweist, der einen inneren Längshohlraum definiert, und das zwei Seitenwände (18a, 18b) aufweist, die durch eine Bodenwand (18c) miteinander verbunden sind, wobei diese Klammer eine im Wesentlichen U-förmige allgemeine Form aufweist, deren mittlerer Teil (34) Mittel zum Halten des Schlauches umfasst und deren Schenkel (36, 38) elastisch verformbar sind und dafür ausgelegt sind, mit dem Arm zusammenzuwirken, vorzugsweise durch elastisches Einrasten, wobei die Schenkel (36, 38) der Klammer im Wesentlichen parallel sind und dazu bestimmt sind, im Inneren des inneren Längshohlraums des Gehäuses angeordnet zu werden, und wobei wenigstens einer der Schenkel außerdem an seinem freien Ende elastisch verformbare Abstützmittel (60, 62, 64) umfasst, die dafür ausgelegt sind, mit der Bodenwand des Gehäuses zusammenzuwirken, **dadurch gekennzeichnet, dass** die Abstützmittel eine elastisch verformbare Zunge (60, 62) umfassen, von der ein Ende mit dem freien Ende des Schenkels verbunden ist, und deren entgegengesetztes Ende eine Anlagefläche umfasst, die dazu bestimmt ist, mit dem Arm zusammenzuwirken, wobei jeder Schenkel (36, 38) und seine Zunge (60, 62) sich im Wesentlichen in derselben Ebene erstrecken.

2. Klammer (40) nach Anspruch 1, **dadurch gekennzeichnet, dass** die Mittel zum Halten ein rohrförmiges, längsgerichtetes Element (44) umfassen, das eine Aufnahme (45) definiert, die dafür ausgelegt ist, den Schlauch (32) aufzunehmen, vorzugsweise durch elastisches Einrasten.

3. Klammer (40) nach Anspruch 2, **dadurch gekennzeichnet, dass** das Element (44) einen Längsschlitz (46) zum Einsetzen des Schlauches (32) in die Aufnahme (45) umfasst, wobei dieser Schlitz vorzugsweise im Wesentlichen auf der Seite der Öffnung des "U" mündet.

4. Klammer (40) nach einem der vorhergehenden Ansprüche, **dadurch gekennzeichnet, dass** die Mittel zum Halten Mittel (47) zur Verankerung im Material des Schlauches (32) umfassen.

5. Klammer (40) nach einem der vorhergehenden Ansprüche, **dadurch gekennzeichnet, dass** jeder Schenkel (36, 38) auf seiner äußeren Seitenfläche ein vorstehendes Element (54, 58) aufweist, das dafür ausgelegt ist, in eine Öffnung (50, 52) des Gehäuses (18) eingeführt zu werden.

6. Klammer (40) nach Anspruch 5, **dadurch gekennzeichnet, dass** das vorstehende Element (54, 58) eines der Schenkel (36, 38) von demjenigen des anderen Schenkels verschieden ist.

7. Klammer (40) nach Anspruch 5 oder 6, **dadurch gekennzeichnet, dass** das vorstehende Element eines der Schenkel (36) einen Haken (54) umfasst, der zum Beispiel eine allgemeine Form eines "L" aufweist.

8. Klammer (40) nach einem der Ansprüche 5 bis 7, **dadurch gekennzeichnet, dass** das vorstehende Element eines der Schenkel (38) einen Zentrierzapfen (58) umfasst, der zum Beispiel eine im Wesentlichen quaderförmige allgemeine Form aufweist.

9. Klammer (40) nach einem der vorhergehenden Ansprüche, **dadurch gekennzeichnet, dass** die Anlagefläche jeder Zunge (60, 62) eine konvexe gekrümmte Fläche ist.

10. Klammer (40) nach einem der vorhergehenden Ansprüche, **dadurch gekennzeichnet, dass** die Schenkel (36, 38) außerdem vorstehende Finger (68) zur Führung der Klammer bei ihrer Anbringung umfassen.

11. Klammer (40) nach einem der vorhergehenden Ansprüche, **dadurch gekennzeichnet, dass** jeder Schenkel an seinem freien Ende elastisch verformbare Abstützmittel (60, 62, 64) umfasst, die dafür ausgelegt sind, mit dem Arm zusammenzuwirken.

12. Antriebsarm (10) eines Scheibenwischerblattes (12) eines Fahrzeugs, insbesondere eines Kraftfahrzeugs, **dadurch gekennzeichnet, dass** er wenigstens eine Klammer (40) nach einem der vorhergehenden Ansprüche umfasst.

13. Arm (10) nach Anspruch 12, **dadurch gekennzeichnet, dass** er ein Gehäuse (18) umfasst, von dem wenigstens ein Teil einen U-förmigen Querschnitt aufweist und zwei Seitenwände (18a, 18b) aufweist, die durch eine Bodenwand (18c) miteinander verbunden sind, wobei die Klammer (40) derart an dem Gehäuse angebracht ist, dass ihre Schenkel (36, 38) durch elastisches Einrasten mit den Seitenwänden des Gehäuses zusammenwirken und dass ihre Abstützmittel (60, 62, 64) mit der Bodenwand des Gehäuses zusammenzuwirken.

14. Arm (10) nach Anspruch 13, **dadurch gekennzeichnet, dass** eine Feder (24) zwischen den Seitenwänden (18a, 18b) des Gehäuses (18) angebracht ist, wobei sich jeder Schenkel (36, 38) der Klammer (40) zwischen der Feder (24) und jeweils einer der Seitenwände des Gehäuses erstreckt.

## Claims

1. Clip (40) for attaching a fluid circulation pipe (32) to a drive arm (10) of a windscreen wiper (12) of a vehicle, in particular of a motor vehicle, the arm comprising a housing (18) having a cross section in the shape of an upside-down U defining a longitudinal internal cavity and comprising two flanks (18a, 18b) connected to one another by a bottom wall (18c), this clip having an essentially U-like general shape, whose median part (34) comprises means for retaining the pipe and the branches (36, 38) are elastically deformable and are configured to cooperate, preferably by elastic snap-fitting, with the arm, the branches (36, 38) of the clip being essentially parallel and intended to be arranged inside the longitudinal internal cavity of the housing and at least one of the branches further comprising at its free end elastically deformable bearing means (60, 62, 64) that are configured to cooperate with the bottom wall of the housing, **characterized in that** the bearing means comprise an elastically deformable tab (60, 62) of which one end is connected to the free end of the branch and of which the opposite end comprises a bearing surface intended to cooperate with the arm, each branch (36, 38) and its tab (60, 62) extend essentially in one and the same plane.

2. Clip (40) according to Claim 1, **characterized in that** the retaining means comprise a tubular longitudinal member (44) defining a recess (45) that is configured to receive the pipe (32), preferably by elastic snap-fitting.

3. Clip (40) according to Claim 2, **characterized in that** the member (44) comprises a longitudinal slot (46) for inserting the pipe (32) into the recess (45), this slot being open preferably on the side of the opening of the U.

4. Clip (40) according to any one of the preceding claims, **characterized in that** the retaining means comprise means (47) for anchoring in the material of the pipe (32).

5. Clip (40) according to any one of the preceding claims, **characterized in that** each branch (36, 38) comprises, on its outer lateral face, a projecting element (54, 58) that is configured to be engaged in an orifice (50, 52) of the housing (18).

6. Clip (40) according to Claim 5, **characterized in that** the projecting element (54, 58) of one of the branches (36, 38) differs from that of the other branch.

7. Clip (40) according to Claim 5 or 6, **characterized in that** the projecting element of one of the branches (36) comprises a hook (54), having for example a generally L-like shape.

8. Clip (40) according to one of Claims 5 to 7, **characterized in that** the projecting element of one of the branches (38) comprises a centring pin (58), having for example an essentially parallelepipedal general shape.

9. Clip (40) according to any one of the preceding claims, **characterized in that** the bearing surface of each tab (60, 62) is a convex curved surface.

10. Clip (40) according to any one of the preceding claims, **characterized in that** the branches (36, 38) also comprise projecting fingers (68) for guiding the clip during mounting thereof.

11. Clip (40) according to any one of the preceding claims, **characterized in that** each branch comprises, at its free end, elastically deformable bearing means (60, 62, 64) that are configured to cooperate with the arm.

12. Drive arm (10) of a windscreen wiper (12) of a vehicle, in particular of a motor vehicle, **characterized in that** it comprises at least one clip (40) according to any one of the preceding claims.

13. Arm (10) according to Claim 12, **characterized in that** it comprises a housing (18) of which at least one part has a U-shaped cross section and comprises two flanks (18a, 18b) connected to one another by a bottom wall (18c), the clip (40) being mounted on the housing in such a way that its branches (36, 38) cooperate by elastic snap-fitting with the flanks of the housing and that its bearing means (60, 62, 64) cooperate with the bottom wall of the housing.

14. Arm (10) according to Claim 13, **characterized in that** a spring (24) is mounted between the flanks (18a, 18b) of the housing (18), each branch (36, 38) of the clip (40) extending respectively between the spring (24) and one of the flanks of the housing.
